# EUROPEAN PATENT SPECIFICATION

(11) **EP 1 749 976 B1**
(45) Date of publication and mention of the grant of the patent: **18.04.2012**
(21) Application number: 06253911.9
(22) Date of filing: 27.07.2006
(51) Int. Cl.: F01D 25/00

(54) **Gas turbine comprising a washing device**
Gasturbine mit einer Reinigungsanlage
Turbine à gaz comprenant un dispositif de lavage

(30) Priority: 04.08.2005 US 161469
(43) Date of publication of application: 07.02.2007
(73) Proprietor: GENERAL ELECTRIC COMPANY, Schenectady, NY 12345 (US)
(72) Inventor: Erickson, Dean M., Simpsonville SC 29681 (US); Hu, Iris Z., Greer, SC 29651 (US); Porter, Lane, Simpsonville SC 29681 (US); Grove, Gerald Wilson, Simpsonville SC 29681 (US); Kight, Matthew S., Greenville SC 29615 (US); Schott, Carl G., Simpsonville SC 29681 (US)
(74) Representative: Cleary, Fidelma

(56) References cited:
- WO-A-2004/055334
- WO-A-2005/028119
- US-A- 4 196 020

## Description

### BACKGROUND OF THE INVENTION

The present application relates generally to gas turbines engines and more particularly relates to an improved on-line compressor water wash system for gas turbine engines.

An on-line water wash system is commonly used to remove contaminants from gas turbine compressors. The on-line system recovers gas turbine efficiency when the operating schedule does not permit shutdown time so as to perform a more effective off-line wash. For example, U.S. Patent No. 5,011,540 to McDermott describes a commonly used on-line water wash system. The nozzles of the system are located in positions upstream or directly at the inlet to the compressor bellmouth casing. These nozzles create a spray mist of water droplets within a region of relatively low velocity air. When in operation, the spray mist is drawn through the bellmouth and into the compressor inlet by the negative pressure produced by the rotating compressor.

This known system, however, does not address the specific travel path of the mist droplets. As a result of this, erosion of the first stage rotating blade may occur at undesirable locations along the leading edge of the blade, including the root region. If erosion pits caused by the droplets exceed a critical flaw size, a total failure of the blade may occur. To prevent this event, monitoring of wash hours along with a blade inspection and repair program may be needed. These requirements, however, are time consuming and costly.

There is a desire, therefore, for an on-line water wash system that eliminates or reduces first stage rotor blade root erosion while still providing effective cleaning of the turbine compressor. It is preferred that the resultant cleaning will be as effective, if not more effective, then commonly known systems.

WO 2004/055334 discloses a method for cleaning a stationary gas turbine unit during operation. A nozzle is disposed within an area of high speed air flow, where the air velocity is at least 40% of the final velocity at the compressor inlet.

US 4196020 discloses a removable wash spray apparatus for gas turbine engines. Spray nozzles are provided between struts of the engine to clean the struts and components downstream thereof.

WO 2005 028 119 shows the technical features of the preamble of independent claim 1.

### SUMMARY OF THE INVENTION

The present application provides a gas turbine comprising an on-line water wash system for a compressor of the gas turbine, the compressor having a bellmouth casing with a region of known high velocity inlet airflow and a plurality of rotating blades, the wash system comprising: a plurality of water nozzles positioned within the bellmouth casing and about the region of known high velocity inlet airflow operable to produce a stream of water droplets; the location of the high velocity airflow being targeted by the plurality of water nozzles whereby the stream of water droplets is sprayed into the high velocity airflow and avoids the bellmouth casing and the plurality of rotating blades; characterized in that: the compressor further includes a plurality of struts and the plurality of water nozzles are positioned between pairs of the plurality of struts, and the stream of water droplets sprayed into the high velocity airflow further avoids the plurality of struts.

The water nozzles include a number of aft side water wash nozzles. The bellmouth casing includes an inlet and the water nozzles are positioned between the inlet and the rotating blades. The water nozzles may be aft nozzles. The compressor also may include a number of struts. The water nozzles may be positioned between the struts. There may be a nozzle for each pair of the struts. The stream of water droplets is targeted by the water nozzles so as to avoid wetting the struts. A pressure regulating valve may be in communication with the nozzles.

### BRIEF DESCRIPTION OF THE DRAWINGS

The invention will now be described in greater detail, by way of example, with reference to the drawings, in which:-
Fig. 1 is a side cross-sectional view of a known water wash system positioned upstream of a bellmouth casing inlet of a compressor.
Fig. 2 is a perspective view of a water manifold system of the water wash system of Fig. 1.
Fig. 3 is a side cross-sectional view of a water wash system as is described herein and positioned downstream of a bellmouth casing inlet of a compressor.
Fig. 4 is a perspective view of a water manifold system of the water wash system of Fig. 3.

### DETAILED DESCRIPTION

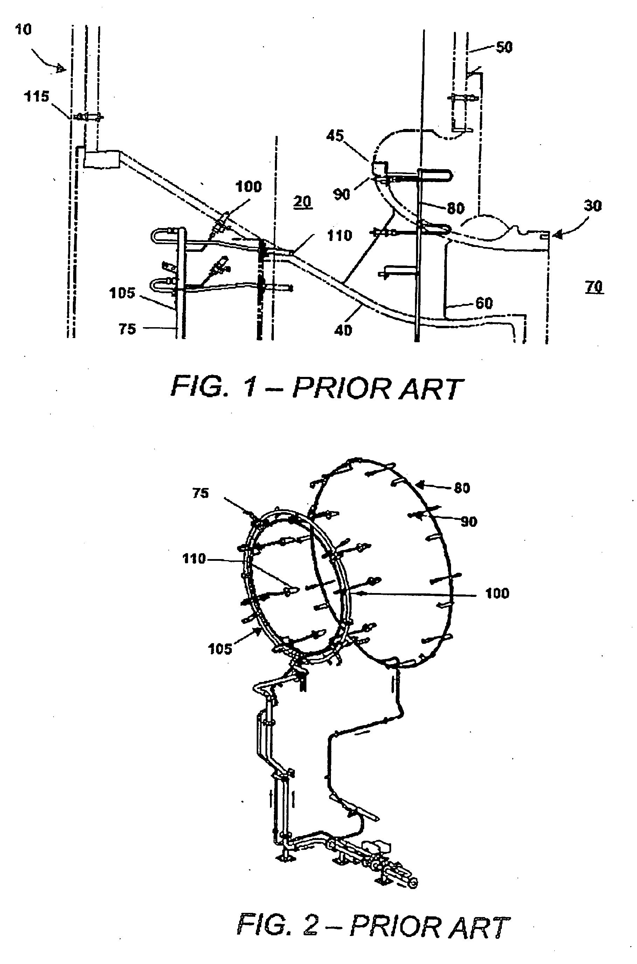

Referring now to the drawings, in which like numerals refer to like elements throughout the several views, Figs. 1 and 2 show an example of a known water wash system 10. The nozzles of the water wash system 10 are positioned about an air inlet pathway 20 of a compressor 30. Generally described, the air inlet pathway 20 of the compressor 30 is defined by a bellmouth casing 40 in communication with an inlet plenum 50. The bellmouth casing 40 includes an inlet 45 adjacent to the inlet plenum 50. The air inlet pathway 20 then leads past a number of bellmouth struts 60 and into a number of rotating blades 70 of the compressor 30.

As shown in Fig. 2, the on-line water wash system 10 includes a number of independent supply manifolds, a forward manifold 75 and an aft manifold 80. Each manifold supplies water to a number of corresponding nozzles, a number of aft nozzles 90 and a number of forward nozzles 100. This arrangement is similar to that shown in U.S. Patent No. 5,011,540 to McDermott, incorporated herein by reference. The overall water wash system 10 also may include an independent manifold 105 and nozzles 110 utilized for off-line water washing. Other up stream nozzles 115 also may be used herein.

As is described above, both sets of nozzles 90 and 100 produce a spray mist of water droplets that are drawn into the air inlet pathway 20 by the negative pressure created by the rotating compressor blades 70. In traveling along the air inlet pathway 20, some droplets may strike the inside diameter wall of the bellmouth casing 40 and/or the bellmouth struts 60. A high concentration of these droplets may strike the root of the first stage rotating blades 70. The nozzles 90, 100, 115 described herein thus provide minimum targeting capability and, hence, less effective cleaning and possibly significant damage to the blades 70.

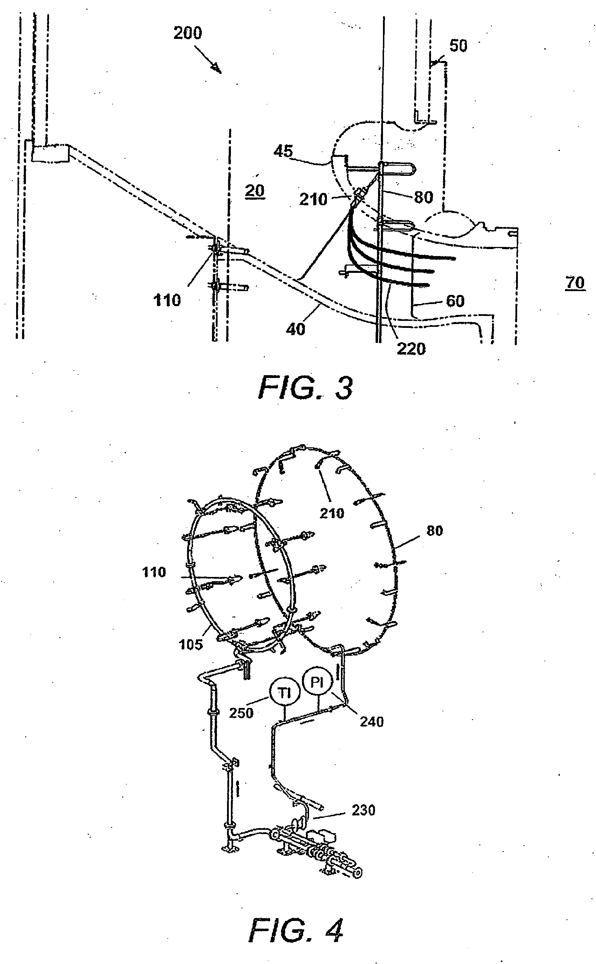

Figs. 3 and 4 show a water wash system 200 as is described herein. In this water wash system 200, the forward on-line water wash nozzles 100 have been eliminated and the aft on-line water wash nozzles 90 have been redesigned and moved to a new location. The new aft nozzles 210 are positioned downstream from the former position of the aft side nozzles 90 of the known water wash system 10. Specifically, the aft side nozzles 210 are positioned about the air inlet pathway 20 within the bellmouth casing 40 and in between the bellmouth struts 60. The nozzles 210 may be installed in holes that are machined into the walls of the casing 40. The number of nozzles 210 may equal to or exceed the number of struts 60 or pairs of struts 60. Single or multiple nozzles 210 can be installed between each set of adjacent struts 60.

The nozzles 210 are positioned in a region of known high inlet air velocity where analysis and testing has confirmed that the spray mist efficiently enters the air inlet pathway 20 of the compressor 30. The specifics of the air velocity regions can be determined by aerodynamic modeling of the air inlet pathway 20, the inlet plenum 50, and the bellmouth casing 40. The positioning minimizes wetting of the walls of the bellmouth casing 40 and the struts 60 and reducing the amount of water reaching the root of the first stage blades 70.

Functionally, the aft side nozzles 210 are located about a position that provides targeting capability into the compressor air inlet pathway 20. The position about the high inlet air velocity results in the ability to optimize the direction of a spray of water droplets 220. Optimal spray coverage is defined as a full radial distribution of the spray droplets 220, with the exception of the roots of the blades 70. Actual targeting is achieved with consideration of the nozzle pressure ratio, the injection angles, and the nozzle tip design. As such, the vast majority of the spray droplets 220 remain in the free airflow path within the compressor air inlet pathway 20.

Both the size and the velocity profile of the spray droplets 220 will vary as the inlet velocity changes. With inlet air velocity being directly related to the geometry of the compressor 30 and the inlet air inlet pathway 20, the optimum design of the system 200 should be analyzed and defined for each specific gas turbine model. This optimization can achieved by system modeling, including computational fluid dynamics (CFD) and full scale wind tunnel (rig) testing. Velocity also may vary with ambient operating conditions, turbine loads, and other operating parameters.

With water supply pressure being a contributor to the nozzle pressure ratio, the system 200 also may include a pressure-regulating valve 230 and local pressure gauge 240 to insure that the pressure is maintained as desired level.

A pressure transducer 250 also may be utilized.

## Claims

1. A gas turbine comprising an on-line water wash system (200) for a compressor (30) of the gas turbine, the compressor (30) having a bellmouth casing (40) with a region of known high velocity inlet airflow and a plurality of rotating blades (70), the wash system comprising:
a plurality of water nozzles (210) positioned within the bellmouth casing (40) and about the region of known high velocity inlet airflow operable to produce a stream of water droplets (220);
the location of the high velocity airflow being targeted by the plurality of water nozzles (210) whereby the stream of water droplets is sprayed into the high velocity airflow and avoids the bellmouth casing (40) and the plurality of rotating blades (70); **characterized in that**:
the compressor (30) further includes a plurality of struts (60) and the plurality of water nozzles (210) are positioned between pairs of the plurality of struts (60), and the stream of water droplets sprayed into the high velocity airflow further avoids the plurality of struts (60).

2. The gas turbine of claim 1, wherein the plurality of water nozzles (210) comprises a plurality of aft side water wash nozzles (210).

3. The gas turbine of claim 1 or 2, wherein the bellmouth casing (40) includes an inlet (45) and wherein the plurality of water nozzles (210) are positioned between the inlet (45) and the plurality of rotating blades (70).

4. The gas turbine of any of the preceding claims, further comprising a pressure regulating valve (230) in communication with the plurality of nozzles (210).

5. The gas turbine of any of the preceding claims, wherein the plurality of water nozzles (210) comprises a nozzle (210) for each pair of struts (60).

6. The gas turbine of any of the preceding claims, wherein the plurality of water nozzles (210) comprises a plurality of nozzles (210) for each pair of struts (60).

## Patentansprüche

1. Gasturbine mit einem während des Betriebs einsetzbaren Wasser-Reinigungssystem (200) für einen Verdichter (30) der Gasturbine, wobei der Verdichter (30) ein glockenförmiges Gehäuse (40) mit einem Bereich bekannter Hochgeschwindigkeitseinlassluftströmung und mehrere rotierende Laufschaufeln (70) hat, wobei das Reinigungssystem aufweist:
mehrere Wasserdüsen (210), die in dem glockenförmigen Gehäuse (40) und um den Bereich der bekannten Hochgeschwindigkeitseinlassluftströmung herum so betreibbar positioniert sind, dass sie einen Strom von Wassertröpfchen (220) erzeugen;
wobei auf den Ort der Hochgeschwindigkeitsluftströmung durch die mehreren Wasserdüsen (210) gezielt wird, wodurch der Strom der Wassertröpfchen in die Hochgeschwindigkeitsluftströmung eingespritzt wird und das glockenförmige Gehäuse (40) und die mehreren rotierenden Laufschaufeln (70) ausspart; **dadurch gekennzeichnet, dass**
der Verdichter (30) ferner mehrere Streben (60) enthält und die mehreren Wasserdüsen (210) zwischen Paaren der mehreren Streben (60) positioniert sind, und der Strom der in die Hochgeschwindigkeitsluftströmung eingespritzten Wassertröpfchen ferner die mehreren Streben (60) ausspart.

2. Gasturbine nach Anspruch 1, wobei die mehreren Wasserdüsen (210) mehrere rückseitige Wasserreinigungsdüsen (210) aufweisen.

3. Gasturbine nach Anspruch 1 oder 2, wobei das glockenförmige Gehäuse (40) einen Einlass (45) enthält, und wobei die mehreren Wasserdüsen (210) zwischen dem Einlass (45) und den mehreren rotierenden Laufschaufeln (70) positioniert sind.

4. Gasturbine nach einem der vorstehenden Ansprüche, die ferner ein Druckregelungsventil (230) in Verbindung mit den mehreren Düsen (210) aufweist.

5. Gasturbine nach einem der vorstehenden Ansprüche, wobei die mehreren Wasserdüsen (210) eine Düse (210) für jedes Strebenpaar (60) aufweisen.

6. Gasturbine nach einem der vorstehenden Ansprüche, wobei die mehreren Wasserdüsen (210) mehrere Düsen (210) für jedes Strebenpaar(60) aufweisen.

## Revendications

1. Turbine à gaz comprenant un système de lavage à eau en ligne (200) pour un compresseur (30) de la turbine à gaz, le compresseur (30) comportant un boîtier évasé (40) avec une région d'écoulement d'air d'entrée à grande vitesse connue et une pluralité d'aubes rotatives (70), le système de lavage comprenant :
une pluralité de gicleurs (210) positionnés à l'intérieur du boîtier évasé (40) et autour de la région d'écoulement d'air d'entrée à grande vitesse connue pouvant agir pour produire un courant de gouttelettes d'eau (220) ;
l'emplacement de l'écoulement d'air à grande vitesse étant ciblé par la pluralité de gicleurs (210) de telle sorte que le courant de gouttelettes d'eau soit pulvérisé dans l'écoulement d'air à grande vitesse et évite le boîtier évasé (40) et la pluralité d'aubes rotatives (70) ; **caractérisée en ce que** :
le compresseur (30) comporte en outre une pluralité de montants (60) et la pluralité de gicleurs (210) est positionnée entre des paires de la pluralité de montants (60) et le courant de gouttelettes d'eau pulvérisées dans l'écoulement d'air à grande vitesse évite également la pluralité de montants (60).

2. Turbine à gaz selon la revendication 1, dans laquelle la pluralité de gicleurs (210) comprend une pluralité de gicleurs de lavage latéraux avant (210).

3. Turbine à gaz selon la revendication 1 ou 2, dans laquelle le boîtier évasé (40) comporte une entrée (45) et dans lequel la pluralité de gicleurs (210) est positionnée entre l'entrée (45) et la pluralité d'aubes rotatives (70).

4. Turbine à gaz selon l'une quelconque des revendications précédentes, comprenant en outre une vanne de régulation de pression (230) en communication avec la pluralité de gicleurs (210).

5. Turbine à gaz selon l'une quelconque des revendications précédentes, dans laquelle la pluralité de gicleurs (210) comprend un gicleur (210) pour chaque paire de montants (60).

6. Turbine à gaz selon l'une quelconque des revendications précédentes, dans laquelle la pluralité de gicleurs (210) comprend une pluralité de gicleurs (210) pour chaque paire de montants (60).
